# EUROPEAN PATENT APPLICATION

(11) **EP 4 697 205 A1**
(43) Date of publication of application: **18.02.2026**
(21) Application number: 24887499.2
(22) Date of filing: 31.07.2024
(51) Int. Cl.: G06F 16/958

(54) **WEBPAGE LOADING METHOD AND ELECTRONIC DEVICE**

(30) Priority: 08.11.2023 CN 202311486949
(71) Applicant: Huawei Technologies Co., Ltd., Shenzhen, Guangdong 518129 (CN)
(72) Inventor: BAO, Xinyou, Shenzhen, Guangdong 518129 (CN); YANG, Shimiao, Shenzhen, Guangdong 518129 (CN)
(74) Representative: Pfenning, Meinig & Partner mbB
(86) International application number: PCT/CN2024/109006
(87) International publication number: WO 2025/097877

(57) **Abstract**

This application discloses a method for loading a web page, and an electronic device. The method includes: The electronic device pre-creates each webview template, and loads some public resources in advance. After a user inputs a first website address in a first input box on a first interface of a first application, the electronic device parses a first parameter and a second parameter of the first website address, where the first parameter represents a type of the first website address, and the second parameter represents a specific address of a first resource. The electronic device obtains a webview template corresponding to the first parameter. The electronic device transfers the second parameter to the webview template, to trigger requesting to obtain the first resource corresponding to the second parameter. The electronic device partially refreshes web page content based on the first resource, to load the web page. In other words, in a webview template of the electronic device, some public resources can be loaded and run in advance, so that the webview template can be used when a specific type of web pages needs to be loaded. This shortens duration for loading the specific type of web pages.

## Description

This application claims priority to Chinese Patent Application No. 202311486949.2, filed with the China National Intellectual Property Administration on November 8, 2023 and entitled "METHOD FOR LOADING WEB PAGE, AND ELECTRONIC DEVICE", which is incorporated herein by reference in its entirety.

### TECHNICAL FIELD

Embodiments of this application relate to the field of application technologies, and in particular, to a method for loading a web page, and an electronic device.

### BACKGROUND

Currently, development approaches for applications (app for short) may be classified into native development and hybrid development. Hybrid development further includes cross-platform framework-based development and webview (webview) bridge technology-based development. Webview is a technology embedding web pages within an application, allowing the application to display web page content. In this way, only a single HTML5 (H5) web page needs to be written, and the web page can be used by rendering it by using webview on different operating systems, without developing multiple sets of applications based on the operating systems. However, webview has disadvantages of poor performance and long web page loading time.

### SUMMARY

Embodiments of this application provide a method for loading a web page, and an electronic device, to preferentially ensure a high frame rate of a key component (for example, a key window/key control), and improve users' smooth performance experience in high-load scenarios.

To achieve the foregoing objective, the following technical solutions are used in embodiments of this application.

According to a first aspect, this application provides a method for loading a web page. The method may be performed by an electronic device or a component (for example, a chip, a chip system, or a processor) in the electronic device. The following uses an example in which the method is performed by the electronic device for description. The method may include: The electronic device displays a first interface of a first application, where the first interface includes a first input box, and the first input box is used to input a website address. After a user inputs a first website address in the first input box, the electronic device parses a first parameter and a second parameter of the first website address, where the first parameter represents a type of the first website address, and the second parameter represents a specific address of a first resource. The electronic device obtains a webview template corresponding to the first parameter. The electronic device transfers the second parameter to the webview template, to trigger requesting to obtain the first resource corresponding to the second parameter. The electronic device partially refreshes web page content based on the first resource, to load the web page.

In this way, the electronic device pre-creates each webview template, and loads some public resources in advance. After the user inputs the first website address in the first input box on the first interface of the first application, the electronic device parses the first parameter and the second parameter that are of the first website address, where the first parameter represents the type to which the first website address belongs, and the second parameter represents the specific address of the first resource. The electronic device obtains the webview template corresponding to the first parameter. The electronic device transfers the second parameter to the webview template, to trigger requesting to obtain the first resource corresponding to the second parameter. The electronic device partially refreshes the web page content based on the first resource, to load the web page. In other words, in a webview template of the electronic device, some public resources can be loaded and run in advance, so that the webview template can be used when a specific type of web pages needs to be loaded. This shortens duration for loading the specific type of web pages.

In a design solution, after the electronic device obtains the webview template corresponding to the first parameter, the method further includes: The electronic device judges whether preheating of the webview template is completed; and if the webview template is in a preheating phase, the electronic device waits for the preheating to complete; or if preheating of the webview template ends, the electronic device calls a first function in the webview template, where the first function is used to modify an address.

In a design solution, that the electronic device transfers the second parameter to the webview template is specifically: The electronic device transfers the second parameter to the webview template after the electronic device detects that the address is modified; the electronic device sends a first request to a server, where the first request is used to obtain the first resource corresponding to the second parameter, and the server is configured to obtain the first resource based on the first request and feed back the first resource; and the electronic device receives the first resource fed back by the server.

In a design solution, the first application uses a front-end framework, and the partially refreshing the web page content based on the first resource is specifically: The electronic device transfers the first resource to the front-end framework, to load the web page, where the front-end framework is configured to partially refresh web page content based on a resource.

In some design solutions, before the electronic device obtains the webview template corresponding to the first parameter, the method further includes: The electronic device determines a same type of website addresses of a same type of web pages based on website addresses of the first application; and the electronic device creates a webview template for the same type of website address, to obtain a webview template corresponding to each type of website addresses.

In some design solutions, the method further includes: The electronic device injects a first function into the webview template, where the first function is used to modify an address.

In some design solutions, the method further includes: The electronic device downloads, based on the webview template, a resource corresponding to a website address, and executes the resource; and the electronic device initializes the front-end framework when a file in which front-end framework initialization code is located is loaded and executed.

The resource may include a resource file (HTML, JS, CSS), and the like.

In this way, when a template web page is preheated on the webview webview template, all static resource files (HTML, JS, CSS) required by the web page are downloaded and executed, to obtain a loaded public web page. Subsequently, the public web page can be partially refreshed based on a specific parameter of a specific website address, to obtain a web page corresponding to the specific website address. This not only saves time for creating a webview, but also saves time for downloading and parsing a template resource and time for initializing a JS running framework.

According to a second aspect, this application provides an electronic device, including a display module, a parsing module, an obtaining module, a triggering module, and a refreshing module. The display module is configured to display a first interface of a first application, where the first interface includes a first input box, and the first input box is used to input a website address. The parsing module is configured to parse, after a user inputs a first website address in the first input box, a first parameter and a second parameter of the first website address, where the first parameter represents a type of the first website address, and the second parameter represents a specific address of a first resource. The obtaining module is configured to obtain a webview template corresponding to the first parameter. The triggering module is configured to transfer the second parameter to the webview template, to trigger requesting to obtain the first resource corresponding to the second parameter. The refreshing module is configured to partially refresh web page content based on the first resource, to load the web page.

In this way, the electronic device pre-creates each webview template, and loads some public resources in advance. After the user inputs the first website address in the first input box on the first interface of the first application, the electronic device parses the first parameter and the second parameter that are of the first website address, where the first parameter represents the type to which the first website address belongs, and the second parameter represents the specific address of the first resource. The electronic device obtains the webview template corresponding to the first parameter. The electronic device transfers the second parameter to the webview template, to trigger requesting to obtain the first resource corresponding to the second parameter. The electronic device partially refreshes the web page content based on the first resource, to load the web page. In other words, in a webview template of the electronic device, some public resources can be loaded and run in advance, so that the webview template can be used when a specific type of web pages needs to be loaded. This shortens duration for loading the specific type of web pages.

In some design solutions, the electronic device further includes: a judgment module, configured to judge whether preheating of the webview template is completed; and an execution module, configured to: if the webview template is in a preheating phase, wait for the preheating to complete; or if preheating of the webview template ends, call a first function in the webview template, where the first function is used to modify an address.

In a design solution, the triggering module is configured to: transfer the second parameter to the webview template after it is detected that the address is modified; send a first request to a server, where the first request is used to obtain the first resource corresponding to the second parameter, and the server is configured to obtain the first resource based on the first request and feed back the first resource; and receive the first resource fed back by the server.

In a design solution, the refreshing module is configured to: transfer the first resource to the front-end framework, to load the web page, where the front-end framework is configured to partially refresh web page content based on a resource.

In some design solutions, the electronic device further includes: a determining module, configured to determine a same type of website addresses of a same type of web pages based on website addresses of the first application; and a creation module, configured to create a webview template for the same type of website addresses, to obtain a webview template corresponding to each type of website addresses.

In some design solutions, the electronic device further includes: an injection module, configured to inject a first function into the webview template, where the first function is used to modify an address.

In some design solutions, the electronic device further includes: a download module, configured to: download, based on the webview template, a resource corresponding to a website address, and execute the resource; and an initialization module, configured to initialize the front-end framework when a file in which front-end framework initialization code is located is loaded and executed.

In this way, when a template web page is preheated on the webview webview template, all static resource files (HTML, JS, CSS) required by the web page are downloaded and executed, to obtain a loaded public web page. Subsequently, the public web page can be partially refreshed based on a specific parameter of a specific website address, to obtain a web page corresponding to the specific website address. This not only saves time for creating a webview, but also saves time for downloading and parsing a template resource and time for initializing a JS running framework.

According to a third aspect, this application provides an electronic device. The electronic device includes one or more processors and a memory. The memory stores code, and when the code is executed by the processor, the electronic device is enabled to perform the method according to the first aspect.

According to a fourth aspect, this application provides a computer-readable storage medium, including computer instructions. When the computer instructions are run on an electronic device, the electronic device is enabled to perform the method according to the first aspect.

For specific implementations and corresponding technical effect of the second aspect to the fourth aspect, refer to specific implementations and technical effect of the first aspect.

### BRIEF DESCRIPTION OF DRAWINGS

FIG. 1 is a diagram of a structure of an electronic device according to an embodiment of this application;
FIG. 2 is a diagram of an architecture of an electronic device according to an embodiment of this application;
FIG. 3 is a schematic flowchart of a method for loading a web page according to an embodiment of this application;
FIG. 4 is another schematic flowchart of a method for loading a web page according to an embodiment of this application; and
FIG. 5 is a diagram of an interface of another electronic device according to an embodiment of this application.

### DESCRIPTION OF EMBODIMENTS

Development of an application (app for short) may be classified into native development and hybrid development. Hybrid development further includes cross-platform framework-based development and webview (webview) bridge technology-based development. A webview is a technology embedding a web page in an application, and allows the application to display web page content. In this way, only an H5 web page needs to be written, and can be used by rendering the web page by using the webview on different operating systems, without developing a plurality of sets of applications based on the operating systems. However, the webview has disadvantages of poor performance and long web page loading time.

Currently, in a method for loading a web page, when it is detected that an application is started, a browser for creating a to-be-used webview is usually triggered to be launched. Then, when the application runs, the to-be-used webview is created by wrapping context information of the application. Then, the webview is cached. When the webview is required to load a web page, the web page is loaded by using the cached webview. Because the webview is created in advance when the application runs, instead of being created when actually being required, time for creating the webview is shortened, and a page loading speed is further improved.

To resolve the foregoing technical problem, this application provides a method for loading a web page. The method is applied to an electronic device, and the method may include: The electronic device displays a first interface of a first application, where the first interface includes a first input box, and the first input box is used to input a website address. After a user inputs a first website address in the first input box, the electronic device parses a first parameter and a second parameter of the first website address, where the first parameter represents a type of the first website address, and the second parameter represents a specific address of a first resource. The electronic device obtains a webview template corresponding to the first parameter. The electronic device transfers the second parameter to the webview template, to trigger requesting to obtain the first resource corresponding to the second parameter. The electronic device partially refreshes the web page content based on the first resource, to load the web page. In other words, in a webview template of the electronic device, some public resources can be loaded and run in advance, so that the webview template can be used when a specific type of web pages needs to be loaded. This shortens duration for loading the specific type of web pages.

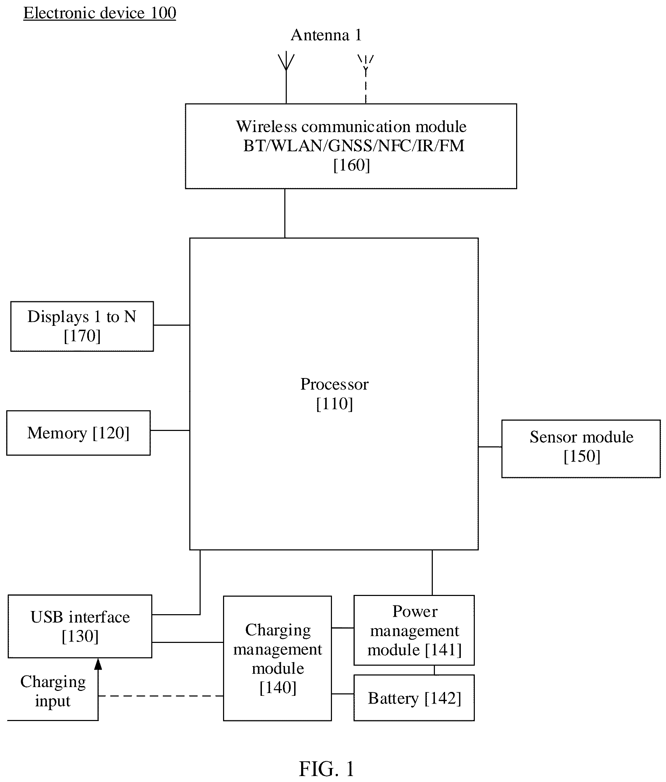

FIG. 1 is a block diagram of a structure of an electronic device according to an embodiment of this application.

As shown in FIG. 1, the electronic device 100 may include a processor 110, a universal serial bus (universal serial bus, USB) interface 130, a charging management module 140, a power management module 141, a battery 142, a memory 120, an antenna 1, a wireless communication module 160, a display 170, and a sensor module 150.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, shortens waiting time of the processor 110, and improves system efficiency.

The charging management module 140 is configured to receive a charging input from a charger. The charger may be a wireless charger or a wired charger. In some wired charging embodiments, the charging management module 140 may receive a charging input of a wired charger through the USB interface 130. In some wireless charging embodiments, the charging management module 140 may receive a wireless charging input through a wireless charging coil of the electronic device. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the display 170, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device may be implemented through the antenna 1, the wireless communication module 160, the modem processor, the baseband processor, and the like.

The antenna 1 is configured to: transmit and receive electromagnetic wave signals. Each antenna of the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave through the antenna 1, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 1. In some embodiments, the wireless communication module 160 receives application information sent by a server.

The electronic device implements a display function through the GPU, the display 170, the application processor, and the like. The GPU is a microprocessor for image processing, and is connected to the display 170 and the application processor. The GPU is configured to: perform mathematical and geometric computation, and render an image. The processor 110 may include one or more GPUs, which execute program instructions to generate or change display information.

The display 170 is configured to display an image, a video, and the like. The display 170 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 170, where N is a positive integer greater than 1.

The memory 120 may be configured to store computer-executable program code. The executable program code includes instructions. The memory 120 may include a program storage area and a data storage area. The program storage area may store an operating system, an application required by at least one function (for example, a sound playing function or an image playing function), and the like. The data storage area may store data (for example, audio data and a phone book) created in a process in which the electronic device is used, and the like. In addition, the memory 120 may include a high-speed random access memory, and may further include a nonvolatile memory, for example, at least one magnetic disk storage device, a flash storage device, or a universal flash storage (universal flash storage, UFS). The processor 110 runs the instructions stored in the memory 120, and/or the instructions stored in the memory arranged in the processor to perform various function applications and data processing of the electronic device.

Certainly, the electronic device may further include another functional unit. This is not limited in embodiments of this application.

In addition, actions, terms, and the like in embodiments of this application may be mutually referenced. This is not limited. In embodiments of this application, each message name, a parameter name in a message, or the like is merely an example. During specific implementation, other names may be used. This is not limited.

The electronic device may be a device like a mobile phone, a tablet computer, a laptop computer, a notebook computer, an ultra-mobile personal computer (ultra-mobile personal computer, UMPC), a handheld computer, a netbook, a personal digital assistant (personal digital assistant, PDA), or a wearable electronic device. A specific form of the electronic device is not specially limited in embodiments of this application.

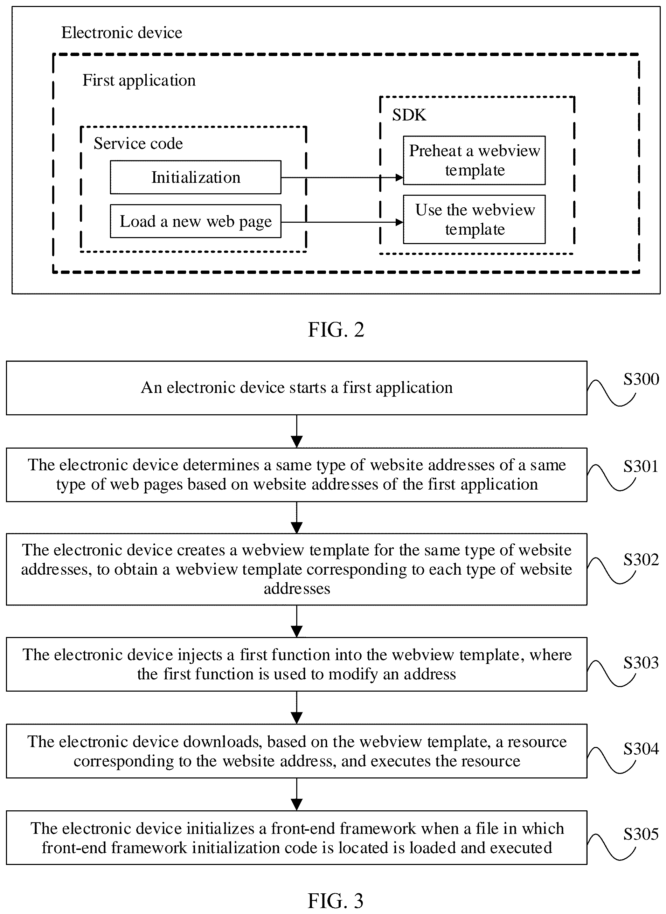

FIG. 2 is a diagram of another structure of the electronic device. As shown in FIG. 2, the electronic device may be installed with a first application, and the first application includes service code and a software development kit (software development kit, SDK). In a development phase of the first application, a developer may create a webview template based on the service code of the first application, and performs, via the SDK, operations such as injecting, into the webview webview template, a function used to modify an address, and loading public resources and executing the public resources (which may be referred to as a webview preheating phase for short), to obtain a loaded web page. In a use phase of the first application, when a user inputs a first website address on an interface of the first application, the first application analyzes parameters of the first website address, obtains, based on a first parameter of the first website address, a webview webview template corresponding to the parameter, inputs a second parameter of the first website address into the webview webview template, downloads a first resource corresponding to the second parameter, and loads the first resource on the loaded web page, to partially refresh web page content on the loaded web page and obtain a new web page.

All technical solutions in the following embodiments may be implemented in a device having the structures shown in FIG. 1 and FIG. 2.

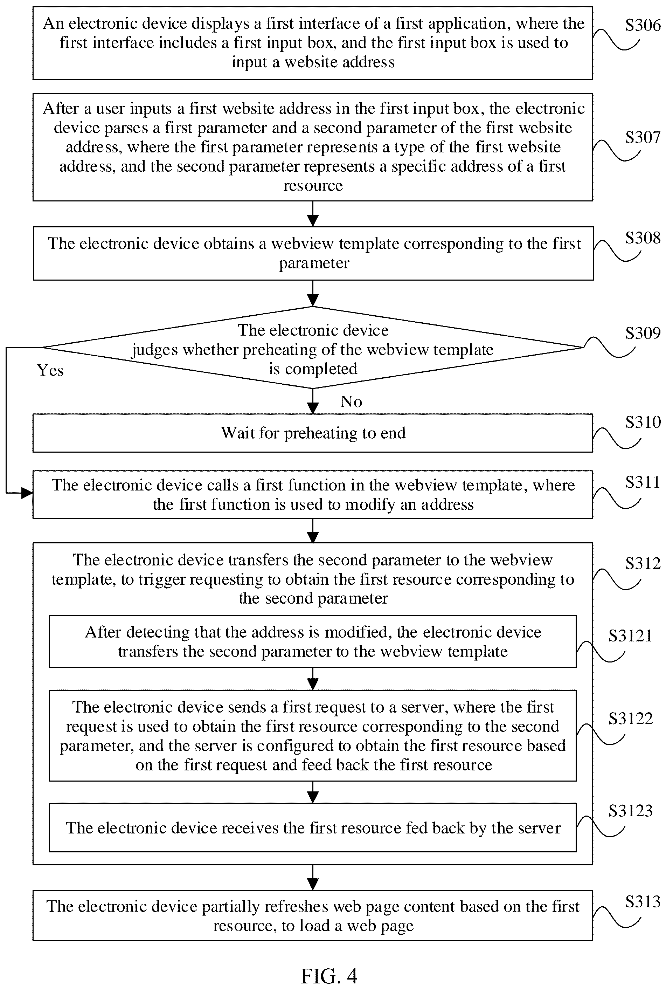

FIG. 3 and FIG. 4 each are a schematic flowchart of a method for loading a web page according to an embodiment of this application. The method is applied to an electronic device, and the method may be described in detail in the following phases. Details are as follows.

First phase: Create a webview template in a development phase of an application.

As shown in FIG. 3, the method for loading the web page provided in this embodiment of this application may include S300 to S305 (some steps are optional), and S300 to S305 are specifically as follows.

S300: The electronic device starts the first application.

The first application may be a system application, or may be a third-party application.

For example, the first application is the application Vmall. After the electronic device starts the first application, the electronic device displays a home page interface of Vmall. An SDK is introduced into code of the interface.

S301: The electronic device determines a same type of website addresses of a same type of web pages based on website addresses of the first application.

Example 1: For example, the first application is the application Vmall. Website addresses of the first application may include:
https://www.vmall.com/index.html;
https://www.vmall.com/portal/activity/index.html?pn=zhbgpc;
https://www.vmall.com/product/10086024403252.html; and
https://www.vmall.com/product/10086692389605.html.

In this case, the electronic device may determine https://www.vmall.com/product/10086024403252.html and https://www.vmall.com/product/10086692389605.html are a same type of website addresses. That is, https://www.vmall.com/product/ is a public website address.

Example 2: For example, the first application is a search-type application. Website addresses of the first application may include:
https://consumer.huawei.com/cn/mobileservices/health/?toCampaign&ivk_sa=10268 60c;
https://consumer.huawei.com/cn/phones/; and
https://consumer.huawei.com/cn/visions/.

In this case, the electronic device may determine https://consumer.huawei.com/cn/visions/, htps://consumer.huawei.com/cn/mobileservices/health/?toCampaign&ivk_sa=1026860c, and https://consumer.huawei.com/cn/phones/ are a same type of website addresses. That is, https://consumer.huawei.com/cn/ is a public website address.

It can be learned from Example 1 and Example 2 that the electronic device may determine the same type of website addresses based on the website addresses of the first application, the same type of website addresses correspond to the same type of web pages, and the same type of web pages require same hypertext markup language (HTML), interpreted or just-in-time compilation programming language (JS), and cascading style sheets (cascading style sheets, CSS).

It should be noted herein that the same type of website addresses of the same type of web pages determined in this phase may be obtained by a developer through classification and summarization. This is not specifically limited in this embodiment of this application.

S302: The electronic device creates a webview template for the same type of website addresses, to obtain a webview template corresponding to each type of website addresses.

To be specific, the electronic device creates the webview webview template based on parameters of the same type of website addresses. Specifically, the SDK creates the webview webview template based on the parameters of the same type of website addresses. In this way, each type of website addresses corresponds to a webview webview template.

For example, Example 1 is still used. The public website address https://www.vmall.com/product/ is a webview template. Example 2 is still used. The public website address https://consumer.huawei.com/cn/ is a webview template.

S303: The electronic device injects a first function into the webview template, where the first function is used to modify an address.

To be specific, the first function may be used to modify a uniform resource locator (uniform resource locator, URL) at an address bar. For example, the first function may be an updateURL function.

Subsequently, after the first function is injected into the webview template, when a first website address is transferred to the webview template, an entire web page does not need to be reloaded, and only a resource corresponding to the first website address needs to be loaded. This partially refreshes the web page.

In some embodiments, after the electronic device creates the webview template, the SDK of the electronic device caches the created webview template in a background of the electronic device to wait for subsequent use. The webview template is not perceived on a foreground interface of the electronic device.

S304: The electronic device downloads, based on the webview template, the resource corresponding to the website address, and executes the resource.

It should be understood that the electronic device loads, based on the webview template, the resource corresponding to the template website address, and executes the resource. In other words, the electronic device loads a public web page corresponding to the webview template in advance. For example, Example 1 is still used. The electronic device loads resources such as JS and CSS corresponding to https://www.vmall.com/product/ and executes the resources. Example 2 is still used. The electronic device loads resources such as JS and CSS corresponding to https://consumer.huawei.com/cn/ and executes the resources.

S305: The electronic device initializes a front-end framework when a file in which front-end framework initialization code is located is loaded and executed.

It should be understood that the front-end framework is a framework usually used during web page development. The framework has the following features: When a browser loads an HTML file, JS files included in the HTML file are downloaded and executed. In these JS files, the front-end framework is initialized and the corresponding instance is generated. Web pages in the same application usually use the same front-end framework. In other words, framework initialization actions of these web pages are the same.

In this way, when a template web page is preheated on the webview webview template, all static resource files (HTML, JS, CSS) required by the web page are downloaded and executed, to obtain the loaded public web page. Subsequently, the public web page can be partially refreshed based on a specific parameter of a specific website address, to obtain a web page corresponding to the specific website address. This not only saves time for creating a webview, but also saves time for downloading and parsing a template resource and time for initializing a JS running framework.

Second phase: Use the webview template in a use phase of the application.

As shown in FIG. 4, the method for loading the web page provided in this embodiment of this application may include S306 to S313 (some steps are optional), and S306 to S313 are specifically as follows.

S306: The electronic device displays a first interface of the first application, where the first interface includes a first input box, and the first input box is used to input a website address.

In an example, a user may input the first website address in the first input box, or may automatically input, in the first input box after operating a control on an activity page interface, a website address corresponding to the control.

For example, the first application is the application Vmall. As shown in FIG. 4, the electronic device displays the first interface, where the first interface may be an activity page interface, and the interface displays the first input box.

S307: After the user inputs the first website address in the first input box, the electronic device parses a first parameter and a second parameter of the first website address, where the first parameter represents a type of the first website address, and the second parameter represents a specific address of a first resource.

In a specific implementation, that the user inputs the first website address in the first input box may be specifically: The user directly inputs the first website address in the first input box; or the user may tap an object corresponding to the first website address on the first interface, and in response to the user operation, the electronic device fills the first input box with the first website address of the object.

In a specific implementation, that the electronic device parses the first parameter and the second parameter that are of the first website address may be specifically: The electronic device divides parameters of the first website address to obtain the first parameter and the second parameter. In an example, the electronic device may divide the parameters of the first website address according to a historical division rule. The historical division rule may include dividing a common part of object website addresses on a same interface into the first parameter, and dividing different parts into the second parameter; or dividing a common part of website addresses corresponding to a same type of objects on a same interface into the first parameter, and dividing a different part into the second parameter.

For example, object website addresses on a same interface include https://consumer.huawei.com/cn/phones/ and https://consumer.huawei.com/cn/visions/, where https://consumer.huawei.com/cn/ is a common part of the two website addresses, namely, the first parameter, and "phones/" and "visions/" are different parts of the two website addresses, namely, the second parameter.

S308: The electronic device obtains a webview template corresponding to the first parameter.

In a specific implementation, the SDK of the electronic device obtains, from the cache, the webview template corresponding to the first parameter. For example, in the first phase, the cache of the electronic device stores the webview template corresponding to the first parameter. For example, the first parameter is "https://consumer.huawei.com/cn", and the webview template corresponding to the first parameter is resources and an interface at the website address. After the electronic device determines the first parameter of the first website address, the electronic device may obtain, from the cache based on the first parameter, the webview template corresponding to the first parameter. For example, the SDK of the electronic device obtains, from the cache, the webview template corresponding to "https://consumer.huawei.com/cn".

S309: The electronic device judges whether preheating of the webview template is completed, and if the webview template is in a preheating phase, performs S310, or if preheating of the webview template ends, performs S311.

The preheating phase refers to S304 to S306 in the first phase.

S310: Wait for the preheating to complete.

S311: The electronic device calls a first function in the webview template, where the first function is used to modify an address.

For example, the first function is an updateURL function. The electronic device calls the updateURL function to modify a URL at n address bar.

S312: The electronic device transfers the second parameter to the webview template, to trigger requesting to obtain the first resource corresponding to the second parameter.

In a specific implementation, S312 may be specifically implemented as follows: S3121: After detecting that the address is modified, the electronic device transfers the second parameter to the webview template. S3122: The electronic device sends a first request to a server, where the first request is used to obtain the first resource corresponding to the second parameter, and the server is configured to obtain the first resource based on the first request and feed back the first resource. S3123: The electronic device receives the first resource fed back by the server.

In this way, the JS is loaded and run in advance in the first phase, and the first resource corresponding to the first request is obtained from the server in the second phase. This shortens duration for loading a resource and has no white screen during loading.

S313: The electronic device partially refreshes web page content based on the first resource, to load the web page.

In a specific implementation, the first application uses the front-end framework, and S313 may be specifically: The electronic device transmits the first resource to the front-end framework, to load the web page. The front-end framework is used to partially refresh the web page content based on the resource.

In this way, when a template web page is preheated on the webview webview template in the first phase, all static resource files (HTML, JS, CSS) required by the web page are downloaded and executed, to obtain the loaded public web page. In this case, in the second phase, the public web page can be partially refreshed based on a specific parameter of a specific website address, to obtain a web page corresponding to the specific website address, and an entire web page does not need to be reloaded. This not only saves time for creating a webview, but also saves time for downloading and parsing a template resource and time for initializing a JS running framework.

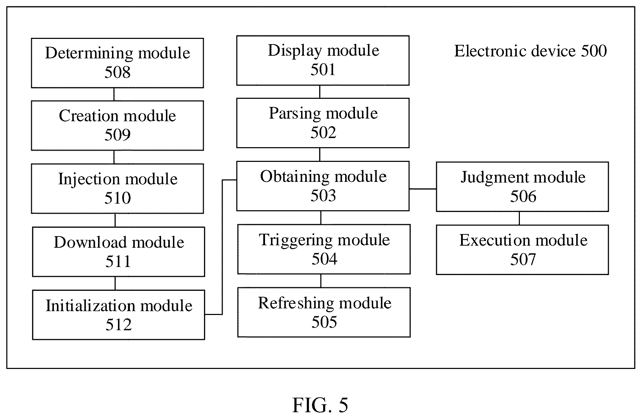

An embodiment of this application further provides an electronic device configured to implement any one of the foregoing methods. For example, an electronic device is provided and includes units (or means) configured to implement the steps S300 to S313 performed by the electronic device in the foregoing method. For example, FIG. 5 is a diagram of the electronic device according to this embodiment of this application. The electronic device 500 may include a display module 501, a parsing module 502, an obtaining module 503, a triggering module 504, and a refreshing module 505.

The display module 501 is configured to display a first interface of a first application, where the first interface includes a first input box, and the first input box is used to input a website address. For example, the display module 501 may perform the step S306. The display module 501 may be the display 170 shown in FIG. 1.

The parsing module 502 is configured to parse, after a user inputs a first website address in the first input box, a first parameter and a second parameter of the first website address, where the first parameter represents a type of the first website address, and the second parameter represents a specific address of a first resource. For example, the parsing module 502 may perform the step S307. The parsing module 502 may be the processor 110 shown in FIG. 1.

The obtaining module 503 is configured to obtain a webview template corresponding to the first parameter. For example, the obtaining module 503 may perform the step S308. The obtaining module 503 may be the processor 110 shown in FIG. 1.

The triggering module 504 is configured to transfer the second parameter to the webview template, to trigger requesting to obtain the first resource corresponding to the second parameter. For example, the triggering module 504 may perform the step S312. The triggering module 504 may be the processor 110 shown in FIG. 1.

The refreshing module 505 is configured to partially refresh web page content based on the first resource, to load a web page. For example, the refreshing module 505 may perform the step S313. The refreshing module 505 may be the processor 110 shown in FIG. 1.

In some design solutions, the electronic device 500 further includes:
a judgment module 506, configured to judge whether preheating of the webview template is completed, where for example, the judgment module 506 may perform the step S309, and the judgment module 506 may be the processor 110 shown in FIG. 1; and
an execution module 507, configured to: if the webview template is in a preheating phase, wait for the preheating to complete; or if preheating of the webview template ends, call a first function in the webview template, where the first function is used to modify an address. For example, the execution module 507 may perform the steps S310 and S311. The execution module 507 may be the processor 110 shown in FIG. 1.

In a design solution, the triggering module 504 is configured to: transfer the second parameter to the webview template after it is detected that the address is modified; send a first request to a server, where the first request is used to obtain the first resource corresponding to the second parameter, and the server is configured to obtain the first resource based on the first request and feed back the first resource; and receive the first resource fed back by the server. For example, the triggering module 504 may perform the steps S3121 to S3123.

In a design solution, the refreshing module 505 is configured to: transfer the first resource to a front-end framework, to load the web page, where the front-end framework is configured to partially refresh web page content based on a resource.

In some design solutions, the electronic device 500 further includes:
a determining module 508, configured to determine a same type of website addresses of a same type of web pages based on website addresses of the first application, where for example, the determining module 508 may perform the step S301, and the determining module 508 may be the processor 110 shown in FIG. 1; and
a creation module 509, configured to create a webview template for the same type of website addresses, to obtain a webview template corresponding to each type of website addresses. For example, the creation module 509 may perform the step S302. The creation module 509 may be the processor 110 shown in FIG. 1.

In some design solutions, the electronic device 500 further includes:
an injection module 510, configured to inject a first function into the webview template, where the first function is used to modify an address. For example, the injection module 510 may perform the step S303. The injection module 510 may be the processor 110 shown in FIG. 1.

In some design solutions, the electronic device 500 further includes:
a download module 511, configured to: download, based on the webview template, a resource corresponding to a website address, and execute the resource, where for example, the download module 511 may perform the step S304, and the download module 511 may be the processor 110 shown in FIG. 1; and
an initialization module 512, configured to initialize the front-end framework when a file in which front-end framework initialization code is located is loaded and executed. For example, the initialization module 512 may perform the step S305. The initialization module 512 may be the processor 110 shown in FIG. 1.

In this embodiment of this application, the electronic device pre-creates each webview template, and loads some public resources in advance. After the user inputs the first website address in the first input box on the first interface of the first application, the electronic device parses the first parameter and the second parameter that are of the first website address, where the first parameter represents the type to which the first website address belongs, and the second parameter represents the specific address of the first resource. The electronic device obtains the webview template corresponding to the first parameter. The electronic device transfers the second parameter to the webview template, to trigger requesting to obtain the first resource corresponding to the second parameter. The electronic device partially refreshes the web page content based on the first resource, to load the web page. In other words, in a webview template of the electronic device, some public resources can be loaded and run in advance, so that the webview template can be used when a specific type of web pages needs to be loaded. This shortens duration for loading the specific type of web pages.

Unless otherwise stated or there is a logic conflict, terms and/or descriptions in various embodiments of this application are consistent and may be mutually referenced, and technical features in different embodiments may be combined based on an internal logical relationship thereof, to form a new embodiment.

In embodiments of this application, after the user operates an application on the electronic device, the electronic device starts the application. In this process, the electronic device receives first refresh information at a first moment, and may predict attribute information of a frame image at a future moment based on the first moment, a refresh periodicity, and a correspondence between time and attribute information of a frame image. In this way, the electronic device can determine, based on attribute information of a first frame image and attribute information of a second frame image at a future second moment, that the second frame image is a non-key frame. The electronic device does not draw the second frame image when the second moment arrives. In this way, in a process in which the electronic device starts a setting application, the electronic device can predict a non-key frame at each future moment and filter out the non-key frame. After that, when the future moment arrives, the electronic device does not draw these non-key frame images, so that the electronic device does not need to draw each frame of image. This reduces a calculation amount in an animation process and reduces power consumption.

It should be noted that all related content of the steps in the foregoing method embodiments may be cited in function description of corresponding functional modules. Details are not described herein again.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a chip. The chip includes a processor and an interface circuit. The interface circuit is coupled to the processor. The processor is configured to run a computer program or instructions, to implement the foregoing method. The interface circuit is configured to communicate with a module other than the chip.

All or some of any features or any steps in embodiments of this application may be freely combined. A combined technical solution also falls within the scope of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In descriptions of this application, words such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

## Claims

1. A method for loading a web page, wherein the method comprises:
displaying a first interface of a first application, wherein the first interface comprises a first input box, and the first input box is used to input a website address;
parsing, after a user inputs a first website address in the first input box, a first parameter and a second parameter of the first website address, wherein the first parameter represents a type of the first website address, and the second parameter represents a specific address of a first resource;
obtaining a webview template corresponding to the first parameter;
transferring the second parameter to the webview template, to trigger requesting to obtain the first resource corresponding to the second parameter; and
partially refreshing web page content based on the first resource, to load the web page.

2. The method according to claim 1, wherein after obtaining the webview template corresponding to the first parameter, the method further comprises:
judging whether preheating of the webview template is completed; and
if the webview template is in a preheating phase, waiting for the preheating to complete; or
if preheating of the webview template ends, calling a first function in the webview template, wherein the first function is used to modify an address.

3. The method according to claim 2, wherein transferring the second parameter to the webview template comprises:
transferring the second parameter to the webview template after detecting that the address is modified;
sending a first request to a server, wherein the first request is used to obtain the first resource corresponding to the second parameter, and the server is configured to obtain the first resource based on the first request and feed back the first resource; and
receiving the first resource fed back by the server.

4. The method according to any one of claims 1 to 3, wherein the first application uses a front-end framework, and the partially refreshing the web page content based on the first resource comprises:
injecting the first resource to the front-end framework, to load the web page, wherein the front-end framework is configured to partially refresh web page content based on a resource.

5. The method according to any one of claims 1 to 4, wherein before obtaining the webview template corresponding to the first parameter, the method further comprises:
determining a same type of website addresses of a same type of web pages based on website addresses of the first application; and
creating a webview template for the same type of website addresses, to obtain a webview template corresponding to each type of website addresses.

6. The method according to claim 5, further comprising:
injecting a first function into the webview template, wherein the first function is used to modify an address.

7. The method according to claim 5, further comprising:
downloading, based on the webview template, a resource corresponding to a website address, and executing the resource; and
initializing the front-end framework when a file in which front-end framework initialization code is located is loaded and executed.

8. An electronic device, comprising a display module, a parsing module, an obtaining module, a triggering module, and a refreshing module, wherein
the display module is configured to display a first interface of a first application, wherein the first interface comprises a first input box, and the first input box is used to input a website address;
the parsing module is configured to parse, after a user inputs a first website address in the first input box, a first parameter and a second parameter of the first website address, wherein the first parameter represents a type of the first website address, and the second parameter represents a specific address of a first resource;
the obtaining module is configured to obtain a webview template corresponding to the first parameter;
the triggering module is configured to transfer the second parameter to the webview template, to trigger requesting to obtain the first resource corresponding to the second parameter; and
the refreshing module is configured to partially refresh web page content based on the first resource, to load the web page.

9. The electronic device according to claim 8, further comprising:
a judgment module, configured to judge whether preheating of the webview template is completed; and
an execution module, configured to: if the webview template is in a preheating phase, wait for the preheating to complete; or if preheating of the webview template ends, call a first function in the webview template, wherein the first function is used to modify an address.

10. The electronic device according to claim 9, wherein the triggering module is configured to:
transfer the second parameter to the webview template after it is detected that the address is modified;
send a first request to a server, wherein the first request is used to obtain the first resource corresponding to the second parameter, and the server is configured to obtain the first resource based on the first request and feed back the first resource; and
receive the first resource fed back by the server.

11. The electronic device according to any one of claims 8 to 10, wherein the refreshing module is configured to:
transfer the first resource to the front-end framework, to load the web page, wherein the front-end framework is configured to partially refresh web page content based on a resource.

12. The electronic device according to any one of claims 8 to 11, further comprising:
a determining module, configured to determine a same type of website addresses of a same type of web pages based on website addresses of the first application; and
a creation module, configured to create a webview template for the same type of website addresses, to obtain a webview template corresponding to each type of website addresses.

13. The electronic device according to claim 12, further comprising:
an injection module, configured to inject a first function into the webview template, wherein the first function is used to modify an address.

14. The electronic device according to claim 12, further comprising:
a download module, configured to: download, based on the webview template, a resource corresponding to a website address, and execute the resource; and
an initialization module, configured to initialize the front-end framework when a file in which front-end framework initialization code is located is loaded and executed.

15. An electronic device, wherein the electronic device comprises one or more processors and a memory, the memory stores code, and when the code is executed by the processor, the electronic device is enabled to perform the method according to any one of claims 1 to 7.
